# FASCICULE DE BREVET EUROPEEN

(11) **EP 2 979 839 B1**
(45) Date de publication et mention de la délivrance du brevet: **25.01.2017**
(21) Numéro de dépôt: 15178992.2
(22) Date de dépôt: 30.07.2015
(51) Int. Cl.: B29C 47/00, B29C 47/02, B29C 47/06, B32B 27/32, B32B 27/08, B32B 27/30, B32B 27/36, C08L 67/04, H01B 3/30, H01B 7/18, H01B 7/295, C08K 3/32, C08L 23/06, C08L 23/10, C09D 123/12, B29K 23/00, B29K 67/00, B29K 69/00, B29K 105/26, B29L 9/00, B29K 55/02, B29K 105/00, B29L 31/34

(54) **PIÈCES EXTRUDÉES EN MATIÈRE PLASTIQUE COMPRENANT UN REVÊTEMENT IGNIFUGE ADHÉRENT ET LEUR PROCÉDÉ DE PRÉPARATION**
EXTRUDIERTE PLASTIKTEILE MIT FEUERHEMMENDER HAFTBESCHICHTUNG, UND IHR HERSTELLUNGSVERFAHREN
PLASTIC EXTRUSIONS HAVING AN ADHESIVE FLAME-RETARDANT COATING AND METHOD FOR PREPARING SAME

(30) Priorité: 31.07.2014 FR 1457420
(43) Date de publication de la demande: 03.02.2016
(73) Titulaire: Schneider Electric Industries SAS, 92500 Rueil-Malmaison (FR)
(72) Inventeur: OHL, Brigitte, 38800 Champagnier (FR)
(74) Mandataire: Brevalex

(56) Documents cités:
- EP-A1- 1 388 867
- EP-A1- 2 557 113
- EP-A1- 2 565 009
- WO-A1-2010/120673
- WO-A1-2011/041533

## Description

### DOMAINE TECHNIQUE

L'invention a trait à des pièces extrudées en matière plastique comprenant un revêtement ignifuge adhérent.

Plus précisément, l'invention concerne des pièces extrudées comprenant un substrat à matrice polymère thermoplastique, ledit substrat étant revêtu par une couche ignifuge qui adhère au substrat.

L'invention concerne, en outre, un procédé de préparation de ces pièces.

Les pièces extrudées selon l'invention sont notamment des pièces utilisées dans l'industrie électrique, et plus particulièrement des pièces destinées à la gestion et/ou à la protection des câbles et systèmes de câbles, telles que des goulottes ou chemins de câbles qui sont préparés par extrusion.

### ÉTAT DE LA TECHNIQUE ANTÉRIEURE

Les matières plastiques, ou plus exactement les polymères thermoplastiques, sont utilisées dans de nombreux secteurs de l'industrie et notamment dans l'industrie électrique.

Pour de nombreuses utilisations des matières plastiques, et en particulier dans l'industrie électrique, il est nécessaire de leur incorporer un agent ignifuge pour leur conférer des propriétés de résistance au feu et faire en sorte qu'elles satisfassent aux normes européennes et françaises.

Ainsi la norme EN 50085-1 : 2005 qui spécifie les règles et les essais pour les systèmes de goulottes et les systèmes de conduits-profilés destinés au logement de conducteurs isolés, câbles et autres équipements électriques éventuels, indique dans son paragraphe 13.1.1 (« *Initiation of fire* ») les exigences que doivent satisfaire ces pièces lorsqu'elles subissent les essais au fil incandescent selon EN 60695-2-11.

La performance d'inflammabilité GWFI (« *Glow wire Flamability Index* ») requise pour les parties telles qu'enveloppes et couvercles ne maintenant pas en position des parties transportant le courant est, selon EN 50085-1 : 2005 de 650°C.

L'essai au fil incandescent est donc considéré comme satisfait si, à la température de 650°C, aucune inflammation ne survient, ou si les flammes persistantes s'éteignent en moins de 30 secondes après retrait du doigt chauffant, et si la chute de particules n'enflamme pas le papier mousseline disposé sous l'éprouvette.

La norme EN 50085-1: 2005 indique, en outre, dans son paragraphe 13.1.3 (« *Spread of fire* ») les exigences que doivent satisfaire les pièces en matière de propagation du feu.

Des normes analogues existent aux Etats-Unis. Les agents ignifuges les plus couramment utilisés et disponibles dans le commerce sont les agents ignifuges halogénés. Cependant, ces agents ignifuges halogénés présentent des inconvénients vis-à-vis de l'environnement ou de la santé : des problèmes de persistance, de bio-accumulation et de toxicité sont reportés et pris en considération par des organisations extragouvernementales ; certains de ces agents ignifuges à base de substances halogénées sont cités dans les listes des substances très préoccupantes.

Dans le futur, des règlements de plus en plus sévères entreront en vigueur et les agents ignifuges à base de composés halogénés pourraient être progressivement interdits. En conséquence, la conception de pièces ignifuges sans halogènes est nécessaire pour éliminer les préoccupations sanitaires et environnementales.

Des agents ignifuges qui ne sont pas basés sur des substances halogénées sont notamment les polyphosphates d'ammonium et les hydroxydes de métaux. Mais ces agents ignifuges non halogénés présentent aussi des inconvénients : par exemple, ils peuvent altérer les propriétés mécaniques des matières plastiques dans lesquelles ils sont incorporés. Ils peuvent également entraîner une corrosion de l'outillage utilisé pour la mise en forme des pièces plastiques. Parfois leur utilisation n'est pas compatible avec les températures requises pour le moulage des pièces.

En outre, les agents ignifuges et notamment les agents ignifuges halogénés sont généralement présents dans la totalité du volume de la pièce en plastique à laquelle on souhaite conférer des propriétés ignifuges, autrement dit, l'agent ignifuge est réparti dans la masse du plastique constituant la pièce. On peut dire que la pièce est une pièce « monobloc ». C'est notamment le cas des goulottes ou chemins de câble qui sont mises en forme par extrusion de profilés « monobloc » à partir de granulés.

La présence d'un agent ignifuge, notamment halogéné, dans la masse du plastique peut compromettre la recyclabilité des pièces en plastique en fin de vie.

En effet, de nombreux recycleurs de plastiques n'acceptent pas de pièces en plastique contenant des additifs considérés comme suspects du point de vue de leur toxicité. Ces composés considérés comme polluants des plastiques à recycler empêchent leur valorisation, et ce même dans le cas d'une filière de valorisation des déchets plastiques pour la production d'énergie.

Ainsi, la plupart des pièces en plastique utilisées dans l'industrie électrique, qui doivent satisfaire des normes sévères en matière de résistance au feu, ne sont pas recyclables du fait de leur structure monobloc contenant un agent ignifuge, notamment halogéné, dans la masse du plastique, et ne peuvent être qualifiées de pièces « respectueuses de l'environnement ».

Afin de résoudre les problèmes des pièces monoblocs possédant des propriétés de résistance au feu, il a été proposé dans le document EP-A1-2 565 009 une pièce comprenant un substrat en au moins un polymère thermoplastique, et une couche de matériau ignifuge enrobant le substrat, dans laquelle le matériau ignifuge comprend un mélange polymère d'une polyoléfine et d'un polyamide, et un composé ignifuge non-halogéné.

La pièce décrite dans ce document présente une structure spécifique, avec un substrat et une couche intumescente spécifique sur ce substrat. Cette structure peut être qualifiée de structure coeur (ou âme)-peau (ou enveloppe) (« *core-skin* » en anglais).

En d'autres termes, dans la pièce de ce document, on est passé d'une structure « monobloc » avec l'agent ignifuge incorporé dans la masse du plastique, à une fonctionnalisation de surface apportant à cette dernière une propriété de résistance au feu par un effet d'intumescence.

Les pièces de ce document sont préparées exclusivement par un procédé d'injection multimatière, dans lequel on revêt la totalité des surfaces du substrat en un polymère thermoplastique par la couche ignifuge intumescente. Ces pièces sont principalement des boîtiers ou enveloppes d'appareillages électriques.

Dans le procédé mis en oeuvre dans ce document, il n'est pas nécessaire que le matériau qui constitue le coeur de la pièce d'une part et le matériau qui constitue la peau de la pièce d'autre part soient compatibles.

Les enseignements de ce document ne peuvent absolument pas s'appliquer aux pièces préparées par extrusion.

Les pièces préparées par extrusion sont notamment des pièces destinées à la gestion ou à la protection des câbles et systèmes de câbles, telles que des goulottes ou chemins de câbles.

Ces pièces, telles que des goulottes, disponibles actuellement sur le marché présentent en effet la particularité d'être mises en forme par extrusion de profilés monobloc à partir de granulés de polymère.

Le plus souvent on utilise des formulations de polymères à base de PVC (Poly(chlorure de vinyle)) de qualité rigide, qui sont intrinsèquement ignifuges.

Or le PVC est actuellement fortement remis en question, notamment par des ONG puissantes.

En effet, le PVC produit des fumées opaques qui gênent l'évacuation des lieux en cas d'incendie.

De plus il est synthétisé à partir d'un monomère, le chlorure de vinyle, qui est classé « Cancérogène pour l'homme » par le CIRC (groupe 1).

En outre, au stade de la fin de vie, les déchets de PVC sont souvent traités dans des filières « non officielles », par incinération sauvage, et ils sont suspectés d'émettre alors de la dioxine.

Dans certains pays tels que les pays scandinaves, l'utilisation du PVC est proscrite pour certaines applications sensibles.

A la place du PVC, on peut utiliser un mélange d'un polycarbonate PC et d'un Copolymère Acrylonitrile Butadiène Styrène ABS ignifugé (PC ABS, FR), sans retardateur de flamme halogéné. Un tel mélange est disponible dans le commerce.

Cependant, remplacer le PVC par le mélange PC ABS, FR est une solution onéreuse à cause du coût élevé du mélange PC ABS, FR disponible dans le commerce, qui est au moins environ 2 fois supérieur à celui du PVC, et de sa difficulté à être extrudé, en particulier pour des raisons d'instabilité lors de la mise en forme par extrusion.

En outre, ces difficultés liées au « process » ont un impact négatif sur le bilan économique de l'opération de fabrication de la pièce.

Enfin, sur le plan environnemental, cette solution peut apparaître comme une solution discutable car la quantité d'énergie nécessaire lors de la synthèse des polymères du mélange, et les émissions de CO₂ produites lors de cette synthèse sont considérables lorsqu'on les compare aux mêmes paramètres lors de la fabrication du PVC.

Il existe aussi des formulations à base de poly(acide lactique) PLA - qui est un polymère obtenu à partir de ressources renouvelables - ignifugé sans halogène. Toutefois la durabilité de ce polymère n'est pas suffisante pour une utilisation dans un produit électrotechnique.

En effet, certaines formulations à base de PLA sont intrinsèquement sensibles au vieillissement. L'ignifugation de ces formulations par addition d'un d'hydroxyde métallique peut accroître le risque de dégradation prématurée par hydrolyse du polymère.

Il existe donc au regard de ce qui précède un besoin pour des pièces extrudées à base de polymères thermoplastiques qui possèdent des propriétés ignifuges et qui ne contiennent pas d'agents ignifuges halogénés.

Il existe aussi un besoin pour des pièces extrudées à base de polymères thermoplastiques qui puissent être facilement recyclables, qui soient acceptées dans les filières de recyclage et dont les propriétés ignifuges soient conformes aux normes, voire améliorées.

Il existe en outre un besoin pour des pièces extrudées qui soient fabriquées avec des matériaux non toxiques, n'ayant pas d'effets négatifs sur la santé et possédant un faible impact sur l'environnement.

Il serait notamment souhaitable que ces pièces soient fabriquées avec des matériaux ayant un faible impact sur les émissions de CO₂ pour contribuer à la diminution de l'effet de serre et éviter les changements climatiques qui en découlent.

Il existe enfin un besoin pour des pièces extrudées stables dans le temps et durables.

Il existe en outre un besoin pour un procédé de préparation de telles pièces qui soit simple, fiable, comporte un nombre limité d'étapes et qui nécessite peu d'investissements.

Le but de la présente invention est de fournir des pièces extrudées ignifuges à base de polymères thermoplastiques qui répondent, entre autres aux besoins et exigences énumérés plus haut.

Le but de la présente invention est aussi de fournir un procédé de préparation de telles pièces qui réponde entre autres aux besoins et exigences énumérés plus haut pour un tel procédé.

Le but de la présente invention est encore de fournir des pièces à base de polymères thermoplastiques qui possèdent des propriétés ignifuges, et un procédé de préparation de ces pièces ; ces pièces et ce procédé ne présentant pas les inconvénients défauts, limitations et désavantages des pièces et procédés de l'art antérieur et résolvant les problèmes des pièces et procédés de l'art antérieur.

### EXPOSÉ DE L'INVENTION

Ce but et d'autres encore, sont atteints conformément à l'invention par une pièce extrudée comprenant un substrat comprenant au moins un polymère thermoplastique, et une couche ignifuge en un matériau ignifuge enrobant le substrat de sorte que la surface externe de la pièce soit composée uniquement dudit matériau ignifuge, dans laquelle la couche ignifuge adhère au substrat, le matériau ignifuge comprend une polyoléfine et un composé ignifuge non-halogéné, et le substrat comprend un mélange d'une polyoléfine et d'au moins un biopolymère thermoplastique et/ou d'au moins un polymère thermoplastique, et un agent de compatibilisation du biopolymère thermoplastique et/ou du polymère thermoplastique avec la polyoléfine.

Le terme « agent de compatibilisation » est largement utilisé dans le domaine des polymères et a une signification bien établie.

De préférence, le polymère thermoplastique du substrat est issu en totalité ou en partie du recyclage.

De préférence encore, le polymère thermoplastique du substrat est issu à au moins 50% en masse du recyclage.

La pièce extrudée selon l'invention présente une structure spécifique, avec un substrat et une couche ignifuge sur ce substrat. Cette structure peut être qualifiée de structure coeur (ou âme)-peau (ou enveloppe) (« *core-skin* » en anglais).

En outre, selon l'invention, la couche ignifuge est en un matériau spécifique, tandis que le substrat comprend un mélange de composés spécifiques, à savoir un mélange d'une polyoléfine et d'au moins un biopolymère thermoplastique et/ou d'au moins un polymère thermoplastique, de préférence issu en totalité ou en partie du recyclage, et un agent de compatibilisation.

La pièce selon l'invention n'a jamais été décrite ni suggérée dans l'art antérieur, répond aux besoins et exigences énumérés plus haut et apporte une solution aux problèmes susmentionnés.

Tout d'abord, une pièce extrudée à structure coeur-peau n'a jamais été décrite dans l'art antérieur. En effet, le document EP-A1-2 565 009 décrit certes une pièce qui possède une structure coeur-peau, mais il s'agit d'une pièce préparée par un procédé injection multimatière qui est une technique totalement différente de l'extrusion.

Ensuite la combinaison de matériaux spécifiques qui constituent la couche ignifuge et le substrat selon l'invention n'est ni décrite ni suggérée dans l'art antérieur notamment pour des pièces extrudées.

En effet, le substrat comprend des matériaux généralement polaires, qui sont *a priori* naturellement incompatibles avec la polyoléfine apolaire du matériau ignifuge de la couche ignifuge. Ces matériaux polaires sont un biopolymère thermoplastique et/ou au moins un polymère thermoplastique de préférence issu en totalité ou en partie du recyclage. L'addition selon l'invention d'une polyoléfine à ces matériaux *a priori* naturellement incompatibles avec le matériau de la couche ignifuge permet, de manière surprenante, de rendre compatible le matériau du substrat et le matériau ignifuge de la couche ignifuge.

Du fait de la compatibilité ainsi assurée entre le matériau du substrat et le matériau de la couche ignifuge, on obtient selon l'invention une excellente adhérence entre le substrat et la couche ignifuge, adhérence qui est une condition fondamentale pour que la pièce selon l'invention soit préparée par extrusion, ou plus exactement par co-extrusion de la couche et du substrat.

L'agent de compatibilisation permet quant à lui de rendre compatibles entre eux les deux polymères naturellement incompatibles du mélange de polymères du substrat ou coeur, à savoir d'une part une polyoléfine apolaire, et d'autre part un biopolymère thermoplastique et/ou au moins un polymère thermoplastique de préférence issu en totalité ou en partie du recyclage qui est généralement constitué d'un polymère ou mélange de polymères polaires.

C'est précisément la combinaison spécifique de matériaux spécifiques choisis d'une part pour le coeur, substrat, et d'autre pour la couche ignifuge qui rend possible de manière surprenante la fabrication par extrusion de la pièce selon l'invention.

Certains des avantages de la pièce selon l'invention proviennent des excellentes propriétés de résistance au feu intrinsèques fournies par la couche, peau spécifique ignifuge, alors même que cette couche ne contient pas de composé halogéné.

Dans la pièce selon l'invention, à structure coeur-peau, l'agent ignifuge se trouve uniquement dans une couche de surface de la pièce, et il ne s'agit plus d'un agent ignifuge incorporé dans l'ensemble du volume, dans la masse du plastique.

En d'autres termes, selon l'invention, on est passé d'une structure « monobloc » avec l'agent ignifuge incorporé dans la masse du plastique, à une fonctionnalisation de surface apportant à cette dernière une propriété de résistance au feu du fait de l'agent ignifuge non halogéné présent dans la couche.

Une telle structure « coeur-peau » confère à la pièce selon l'invention toute une série d'avantages par rapport aux pièces extrudées de l'art antérieur à structure « monobloc ». Il a été ainsi constaté de manière surprenante que la pièce à structure « coeur-peau » selon l'invention possédait un comportement au feu supérieur à celui d'une pièce à structure monobloc.

Le comportement au feu concerné est lié à la norme EN 50085-1 : 2005, paragraphe 13.1.3 « spread of fire ».

Des essais ont montré qu'une formulation basée sur une matrice organique majoritairement constituée de polymère PLA et sans ajout d'agent ignifuge ne satisfait pas à la norme.

De même, il a été montré qu'une formulation basée sur une matrice organique majoritairement constituée de polycarbonates PC en mélange avec des copolymères acrylonitrile-butadiène-styrène ABS ne satisfait pas aux exigences de la norme précédemment citée.

Les propriétés de résistance au feu de la pièce extrudée selon l'invention étant fondamentalement dues à la peau, ou couche de surface, il n'est plus nécessaire d'incorporer des additifs ignifuges dans le coeur de la pièce, le substrat, pour lequel il n'est plus nécessaire d'avoir recours à des plastiques contenant, dans leur volume, des agents ignifuges et en particulier des agents ignifuges halogénés indésirables au vu de leur profil environnemental et sanitaire.

La pièce à structure « coeur-peau » selon l'invention possède aussi une aptitude au recyclage très nettement supérieure aux pièces extrudées à structure monobloc de l'art antérieur.

En adoptant la structure « coeur-peau » selon l'invention, l'additif ignifuge ne fait plus appel à des substances à base d'halogènes, et de plus les composés apportant la résistance au feu se trouvent localisés à la surface, les problèmes évoqués plus haut sont résolus. Au besoin, si la couche ignifuge est trop épaisse, elle peut éventuellement être retirée par exemple par abrasion (sablage), en fin de vie comme cela se fait déjà pour certaines peintures.

Au total, la gestion des pièces en plastique en fin de vie se trouve grandement améliorée.

Avantageusement, la polyoléfine (aussi bien la polyoléfine du matériau ignifuge de la couche que la polyoléfine du substrat) est choisie parmi les polyéthylènes, les polypropylènes, et leurs mélanges.

Avantageusement, ce qui permet d'améliorer encore la compatibilité entre la couche et le substrat, la polyoléfine du matériau ignifuge de la couche et la polyoléfine du substrat sont identiques.

De préférence, la polyoléfine du matériau ignifuge de la couche et la polyoléfine du substrat, coeur, sont toutes deux choisies parmi les polypropylènes ou toutes deux choisies parmi les polyéthylènes.

Le PP (polypropylène) est particulièrement avantageux, en particulier s'il s'agit de PP « choc » vierge et/ou issu de recyclage.

Un exemple d'un polypropylène qui peut être choisi en tant que polyoléfine du substrat est le polypropylène disponible auprès de la société TOTAL^{®} sous la dénomination Polypropylène PPC 7712.

Avantageusement, la polyoléfine du substrat est totalement ou en partie issue du recyclage.

De préférence encore, la polyoléfine du substrat est issue à au moins 50% en masse du recyclage.

La couche ignifuge comprend, en outre en tant que composant essentiel, un composé ignifuge non halogéné.

De préférence, le composé ignifuge non halogéné est choisi parmi les polyphosphates d'ammonium.

Avantageusement, le composé ignifuge non halogéné représente avantageusement de 5% à 40% en masse par rapport à la masse totale du matériau ignifuge constituant la couche ignifuge, de préférence de 10% à 30% en masse par rapport à la masse totale du matériau ignifuge constituant la couche ignifuge (peau).

Avantageusement, le matériau ignifuge comprend en outre au moins un additif qui modifie une ou plusieurs propriétés parmi les propriétés suivantes de la couche : l'aspect esthétique, la couleur, la résistance de la surface de la couche au vieillissement (par exemple un agent anti-UV), la résistance chimique de la surface de la couche vis-à-vis des substances chimiques telles que l'huile d'olive, la rugosité de surface, l'effet barrière à l'humidité, la résistance à l'usure, l'indice de cheminement comparatif (« *Comparative Tracking Index* »), et la résistance à l'absorption d'eau (« *Water uptake resistance »).*

Ces additifs doivent bien sûr être compatibles avec les autres constituants de la couche et notamment avec la polyoléfine.

Avantageusement, un des additifs sera choisi parmi les colorants et pigments. Un colorant ou pigment sera notamment incorporé dans la couche ignifuge dans le cas où le substrat ou coeur possède une couleur qui n'est pas appropriée pour la pièce, cela peut en particulier se produire lorsque le substrat ou coeur comprend ou est en un polymère issu du recyclage. En effet la couleur généralement sombre d'un tel polymère issu du recyclage peut être ainsi masquée par une couche ignifuge colorée ou pigmentée possédant une couleur plus agréable par exemple une couche blanche.

Par exemple, on peut incorporer dans la couche ignifuge ou plus exactement dans la polyoléfine, telle que le polypropylène, utilisée pour préparer cette couche, de l'oxyde de titane (TiO₂), par exemple entre 1 et 5 parts en masse, pour obtenir ainsi une pièce finale blanche, un produit final blanc.

La résistance à la rayure peut être accrue par le recours aux billes de verre, qui pourront être silanisées pour permettre une bonne comptabilisation avec la matrice polymère en polyoléfine de la couche ou peau ignifuge.

De plus, comme la couleur et l'aspect de la pièce sont apportés par la couche de peau, il est possible de rationaliser les approvisionnements pour la matière constituant le substrat : un seul grade générique pourra suffire, puisque la différentiation liée à la couleur peut être apportée par la peau.

Outre le rôle de surface esthétique de la couche ou peau ignifuge, par exemple en « PP FR » vierge de couleur blanche, qui permet de masquer la couleur sombre d'un plastique recyclé, cette couche peut jouer en outre un rôle de barrière de protection en allongeant la durée de vie d'un biopolymère du substrat. Ainsi la couche ou peau ignifuge, en protégeant et en isolant le coeur des agents extérieurs, diminue grandement la sensibilité de polymères comme le poly(acide lactique) au vieillissement et augmente notablement la durée de vie de la pièce selon l'invention. De plus comme l'agent ignifuge se trouve dans la peau, il n'est pas susceptible de provoquer la dégradation des polymères du substrat.

Pour remplir les conditions fixées par les normes en matière de résistance au feu, la couche ignifuge enrobe totalement le substrat, c'est-à-dire que toutes les surfaces du substrat sont revêtues par la couche ignifuge.

Le matériau ignifuge qui constitue la couche ignifuge est facile à transformer, chimiquement résistant et possède une excellente stabilité dimensionnelle.

Avantageusement, la couche ignifuge a une épaisseur supérieure ou égale à 0,2 mm, de préférence une épaisseur de 0,3 à 0,8 mm.

C'est le produit final qui définit l'épaisseur du substrat, coeur.

Le plus souvent cette épaisseur du substrat, coeur, se situe entre 1 et 2 mm, et peut allerjusqu'à 3 mm.

D'autres avantages de la pièce selon l'invention ne sont pas principalement dus à sa structure coeur-peau mais plutôt à la nature des matériaux qui constituent la pièce.

La pièce selon l'invention ne contient pas de composés considérés comme persistants, bio-accumulatifs ou toxiques, en particulier la pièce considérée dans son ensemble, comprenant le substrat et la couche ignifuge est exempte de composés halogénés (« *halogen free* » en anglais) tels que le PVC.

Par analogie avec la norme DIN VDE 0472 (815) dédiée aux câbles, on entend par pièce, couche ou matériau exempts de composés halogénés que les teneurs en chlore, en brome, ainsi que la teneur totale en chlore et brome, sont inférieures à 0,2%, et la teneur en fluor est inférieure à 0,1%.

La couche ignifuge de la pièce comprend un composé ignifuge non halogéné et une polyoléfine. Cette couche est donc exempte d'halogènes.

De la même manière, la matière plastique, le mélange de polymères thermoplastiques formant le substrat ne contient pas de composés halogénés, tels que le PVC, et la pièce selon l'invention dans son ensemble est exempte d'halogène, ce qui est essentiel en vue de son recyclage éventuel.

On évite ainsi tous les inconvénients déjà mentionnés plus haut des pièces extrudées monoblocs en PVC comme la production de fumées opaques et toxiques pouvant contenir probablement de la dioxine.

La pièce selon l'invention est donc entièrement réalisée à partir de matières saines, qui ne causent pas comme le PVC de préoccupations d'ordre sanitaire ni environnemental.

Le substrat de la pièce selon l'invention comprend un mélange d'une polyoléfine, et d'au moins un biopolymère thermoplastique et/ou d'au moins un polymère thermoplastique de préférence issu en totalité ou en partie du recyclage. Comme on l'a vu plus haut, le substrat ne contient pas de composé ignifuge dans la masse car ce composé ignifuge se trouve dans la peau de la pièce.

Par biopolymère, on entend un polymère issu de bio ressources, c'est-à-dire issu exclusivement d'organismes vivants, généralement végétaux, ou un polymère synthétisé à partir de ressources renouvelables, généralement végétales.

Avantageusement, le substrat comprend de 35% à 55% en masse, de préférence 45% en masse de polyoléfine(s), de 40% à 60% en masse, de préférence 50% en masse, de biopolymère(s) thermoplastique(s) et/ou de polymère(s) thermoplastique(s) de préférence issu(s) en totalité ou en partie du recyclage, et de 3% à 10% en masse, de préférence 5% en masse d'agent de compatibilisation, par rapport à la masse totale du substrat.

La pièce selon l'invention comprend donc généralement une proportion importante de biopolymère(s) thermoplastique(s) et/ou de polymère(s) thermoplastique(s) issu(s) du recyclage. De ce fait, la pièce selon l'invention possède un faible impact sur l'environnement. Si la polyoléfine du substrat et éventuellement la polyoléfine de la couche ignifuge sont issues du recyclage, cet impact est encore moindre.

De cette manière, la pièce peut être qualifiée de pièce « respectueuse de l'environnement » car le mélange de polymères dont est issu son substrat minimise la demande en ressources fossiles épuisables (pétrole). En outre, l'utilisation de plastiques recyclés pour le coeur est un moyen de réduire le prix de ce substrat ou coeur et donc de la pièce finale.

En fin de vie, la pièce selon l'invention peut être facilement recyclée en tant que plastique de deuxième génération.

Avantageusement, le biopolymère thermoplastique est choisi parmi les poly(acide lactiques) PLAs.

Un exemple de Poly (acide lactique) (PLA), est le produit commercialisé par Natureplast^{®} sous la dénomination PLE 001.

Avantageusement, le polymère thermoplastique de préférence issu en totalité ou en partie du recyclage est choisi parmi les copolymères acrylonitrile butadiène-styrène ABS, et les mélanges de polycarbonates PC et de copolymères acrylonitrile-butadiène-styrène ABS.

Un exemple d'Acrylonitrile Butadiène-Styrène (ABS) recyclé est le SIKOFLEX^{®}commercialisé par Ravago^{®}.

Un exemple de mélange de Polycarbonate (PC) et d'Acrylonitrile Butadiène-Styrène (ABS) recyclé est le MABLEX^{®} commercialisé par Ravago^{®}.

En utilisant des copolymères acrylonitrile butadiène-styrène ABS, et des mélanges de polycarbonates PC et de copolymères acrylonitrile-butadiène-styrène ABS, issus du recyclage on surmonte tous les problèmes de coût, de consommation d'énergie et d'impact négatif sur l'environnement de ces copolymères et mélanges neufs, vierges.

Avantageusement, l'agent de compatibilisation est un terpolymère statistique d'éthylène, d'acrylate de méthyle et de méthacrylate de glycidyle.

Un tel terpolymère est le LOTADER AX8900^{®} commercialisé par Arkema^{®}.

La pièce selon l'invention peut être choisie parmi les pièces destinées à la gestion et/ou à la protection des câbles et systèmes de câbles, telles que les goulottes et les chemins de câbles.

La pièce selon l'invention, telle qu'une goulotte, peut être utilisée en lieu et place de produits existants, en particulier dans des environnements tels que les lieux ou bâtiments fréquentés par le public où l'on porte une attention particulière à la préservation de la santé des personnes.

Les pièces selon l'invention pourront aussi être avantageusement utilisées dans des bâtiments résidentiels écologiques, « green ».

La pièce selon l'invention est généralement fabriquée par un procédé de co-extrusion.

L'invention a donc également trait à un procédé de préparation de la pièce selon telle que décrite dans ce qui précède, comprenant au moins une étape dans laquelle on réalise l'extrusion simultanée (ou co-extrusion), dans une filière de co-extrusion dont le profil est adapté à la forme de la pièce, d'un premier courant de matière fondue destinée à former le substrat, préparé dans une première extrudeuse, et d'un deuxième courant de matière fondue destinée à former la couche ignifuge, préparé dans une deuxième extrudeuse.

Le procédé de co-extrusion est déjà largement utilisé dans l'industrie.

La durée de cycle d'un procédé de co-extrusion est voisine de celle d'une simple mise en forme par extrusion.

Le seul investissement supplémentaire nécessaire par rapport à un procédé d'extrusion simple est éventuellement l'acquisition d'une deuxième installation d'extrusion.

Comme on l'a déjà mentionné, l'utilisation de plastiques recyclés est aussi un moyen de réduire le prix du coeur de la pièce selon l'invention.

D'autres effets et avantages de l'invention apparaîtront mieux à la lecture de la description détaillée qui suit, faite à titre illustratif et non limitatif dans laquelle sont notamment exposés des modes de réalisation particuliers de l'invention sous la forme d'exemples décrivant la fabrication de pièces selon l'invention et donnant les résultats d'essais de résistance au feu réalisés sur ces pièces.

### EXPOSÉ DÉTAILLÉ DE MODES DE RÉALISATION PARTICULIERS

On décrit dans ce qui suit la fabrication d'une pièce selon l'invention dans laquelle on utilise la technologie de co-extrusion.

La fabrication d'une pièce selon l'invention comprend généralement trois étapes.

Dans une première étape, on prépare la matière destinée à former le coeur de la pièce ou substrat.

Dans une deuxième étape, qui peut suivre, précéder la première étape, ou être simultanée à la première étape, on prépare la matière destinée à former la couche ignifuge ou peau de la pièce selon l'invention, telle qu'une goulotte.

Dans une troisième étape, la pièce à structure coeur peau selon l'invention telle qu'une goulotte, est préparée par co-extrusion.

Dans la première étape, on commence tout d'abord par préparer des granulés dont la composition correspond à la composition du substrat, coeur de la pièce selon l'invention telle que décrite plus haut.

Ces granulés comprennent donc un mélange d'une polyoléfine, d'au moins un biopolymère thermoplastique et/ou d'au moins un polymère thermoplastique de préférence issu en totalité ou en partie du recyclage, et d'un agent de compatibilisation.

Ces granulés sont préparés en alimentant une extrudeuse, par une trémie, avec les différents constituants énumérés plus haut destinés à former les granulés.

Ainsi, dans le cas où l'on souhaite préparer une pièce avec un coeur riche en matières renouvelables, le mélange extrudé peut par exemple avoir la composition suivante en % en masse :
- Poly (acide lactique) (PLA), tel que le PLE 001 commercialisé par Natureplast^{®} : 50%.
- Polypropylène (PP), tel que le PPC 7712 commercialisé par Total^{®} : 45 %.
- Agent de compatibilisation, tel que le LOTADER AX8900^{®} commercialisé par Arkema : 5%.

Dans le cas où l'on souhaite préparer une pièce avec un coeur riche en matières plastiques recyclés issues de produits en fin de vie, le mélange extrudé peut par exemple avoir la composition suivante en % en masse :
- Acrylonitrile Butadiène-Styrène (ABS) recyclé, tel que le SIKOFLEX^{®} commercialisé par Ravago^{®}, ou mélange de Polycarbonate (PC) et d'Acrylonitrile Butadiène-Styrène (ABS) tel que le MABLEX^{®} commercialisé par Ravago^{®} ou le BAYBLEND^{®} T85XF commercialisé par Bayer Material Science : 50%.
- Polypropylène (PP), tel que le PPC 7712 commercialisé par Total^{®} : 45 %.
- Agent de compatibilisation, tel que le LOTADER AX8900^{®} commercialisé par Arkema : 5%.

Cette extrudeuse peut être par exemple une extrudeuse monovis ou bivis.

L'extrudât obtenu est ensuite refroidi puis soumis à une opération de pastillage, granulation pour donner des granulés ayant généralement une forme de cylindres, et d'une taille généralement standard (diamètre moyen de 2 mm pour une hauteur moyenne de 2 et 5 mm).

Dans la deuxième étape, on prépare des granulés dont la composition correspond à la composition de la couche ignifuge selon l'invention telle que décrite plus haut.

Ces granulés sont préparés par exemple à partir d'une formulation commerciale qui est utilisée comme matrice de base. Il s'agit par exemple de la matière de A. Schulman^{®} référencée Polyflam RPP 490 CS1.

Les granulés comprennent généralement au moins un additif qui modifie une ou plusieurs propriétés de la couche : l'aspect esthétique, la couleur, la résistance de la surface de la couche au vieillissement (par exemple un agent anti-UV), la résistance chimique de la surface de la couche vis-à-vis des substances chimiques telles que l'huile d'olive, la rugosité de surface, l'effet barrière à l'humidité, la résistance à l'usure, l'indice de cheminement comparatif (« *Comparative Tracking Index* »), et la résistance à l'absorption d'eau (« *Water uptake résistance »).*

Dans la troisième étape, on prépare ensuite des pièces selon l'invention à structure coeur-peau, par exemple des profilés bicouches formant une goulotte, par co-extrusion de la matière destinée à former le coeur de la pièce qui a été préparée lors de la première étape, et de la matière destinée à former la couche ignifuge ou peau de la pièce, telle qu'une goulotte, qui a été préparée lors de la deuxième étape.

La co-extrusion est réalisée en utilisant deux extrudeuses qui sont reliées à une filière de co-extrusion vers laquelle sont acheminés simultanément le flux de matière fondu constituant le coeur et le flux de matière fondu constituant la peau de la pièce.

Plus précisément, les deux extrudeuses peuvent être des extrudeuses monovis et elles peuvent comporter chacune trois zones de chauffes dont la température est régulée.

La seconde extrudeuse est alimentée, par l'intermédiaire d'une trémie, avec les granulés préparés comme décrit plus haut destinés à former la peau, couche ignifuge, tandis que la première extrudeuse est alimentée, par l'intermédiaire d'une trémie, par le mélange destiné à former le coeur de la pièce.

Bien évidemment, les rôles de la première et de la seconde extrudeuses peuvent être inversés.

Le flux de matière fondu destiné à former la peau formé dans la seconde extrudeuse et le flux de matière fondu destiné à former le coeur formé dans la première extrudeuse sont acheminés par l'intermédiaire de canaux dans une filière de co-extrusion dont la température est régulée, par exemple au moyen de trois zones de chauffe.

La filière a une forme qui est adaptée à celle de la pièce que l'on souhaite préparer telle qu'une goulotte.

On obtient ainsi, à la sortie de la filière de co-extrusion une pièce conforme à l'invention présentant la structure coeur-peau, bicouche voulue.

L'invention va maintenant être décrite en référence aux exemples suivants donnés à titre illustratif et non limitatif.

### EXEMPLES

### Exemple 1.

Dans cet exemple, on prépare une pièce selon l'invention dont le coeur est riche en matière d'origine renouvelable par le procédé décrit plus haut.

Dans la première étape, on commence tout d'abord par préparer des granulés dont la composition correspond à la composition du substrat, coeur de la pièce selon l'invention.

Ces granulés sont préparés en alimentant une extrudeuse avec les différents constituants destinés à former les granulés par l'intermédiaire d'une trémie.

Cette extrudeuse est une extrudeuse bi-vis corotative Brabender^{®} équipée de 6 zones de chauffe assurant la régulation de la température.

Dans cet exemple, comme l'on souhaite préparer une pièce avec un coeur riche en matières d'origine renouvelable, le mélange extrudé a la composition suivante en % en masse :
- Poly (acide lactique) (PLA), PLE 001 commercialisé par Natureplast^{®} : 50%.
- Polypropylène (PP), PPC 7712 commercialisé par Total^{®} : 45 %.
- Agent de compatibilisation, LOTADER AX8900^{®} commercialisé parArkema : 5%.

L'extrudât obtenu est ensuite refroidi puis soumis à une opération de pastillage, granulation pour donner des granulés ayant généralement une forme de cylindres, et d'une taille généralement standard (diamètre moyen de 2 mm pour une hauteur moyenne de 2 et 5 mm).

Les granulés dont la composition correspond à la composition de la couche ignifuge selon l'invention telle que décrite plus haut sont des granulés d'un polypropylène ignifugé sans halogène, disponible dans le commerce sous la dénomination POLYFLAM^{®} RIPP 490.

Les granulés de POLYFLAM ont généralement une forme de cylindres, avec un diamètre moyen de 2 mm pour une hauteur moyenne de 2 et 5 mm.

On fabrique ensuite des pièces selon l'invention à structure coeur-peau, à savoir des profilés bicouches formant une goulotte.

Ces pièces sont fabriquées par co-extrusion de la matière destinée à former le coeur de la pièce qui a été préparée lors de la première étape, et de la matière destinée à former la couche ignifuge ou peau de la pièce, à savoir le POLYFLAM. La co-extrusion est réalisée en utilisant deux extrudeuses mono-vis YVROUD d'un diamètre de 30 mm qui sont reliées à une filière de co-extrusion vers laquelle sont acheminés simultanément le flux de matière fondu constituant le coeur et le flux de matière fondu constituant la peau de la pièce.

La première extrudeuse est alimentée, par l'intermédiaire d'une trémie, avec les granulés préparés comme décrit plus haut destinés à former le coeur de la pièce, tandis que la seconde extrudeuse est alimentée, par l'intermédiaire d'une trémie, par les granulés de POLYFLAM^{®} destinés à former la peau, la couche ignifuge de la pièce.

Les rôles de la première et de la seconde extrudeuses peuvent être inversés.

Le flux de matière fondu destiné à former le coeur, substrat, formé dans la première extrudeuse et le flux de matière fondu destiné à former la peau, couche ignifuge formé dans la seconde extrudeuse sont acheminés vers une filière de co-extrusion dont la température est régulée, au moyen de trois zones de chauffe.

La filière permet de mettre en forme une bande de 60 mm coextrudée bi-composants, avec une couche de peau de 1 mm d'épaisseur constituée par le matériau décrit plus haut à savoir le POLYFLAM^{®} RIPP 490 et une couche de coeur de 0,8 mm constituée par le matériau décrit plus haut.

Cet exemple prouve qu'il est effectivement possible de fabriquer les pièces selon l'invention par un procédé de co-extrusion.
Cet exemple prouve, en outre, qu'une adhésion de bonne qualité existe entre le coeur et la peau de la pièce selon l'invention.
En effet, la structure bi couche obtenue a été coupée perpendiculairement à la surface puis ensuite observée au microscope. L'analyse de l'interface montre qu'il n'existe pas de vide ni de décollement entre la couche de surface et le substrat constituant le coeur.

### Exemple 2.

Dans cet exemple, on prépare une pièce selon l'invention dont le coeur est riche en matières plastiques issues du recyclage, par le procédé décrit plus haut.

Dans la première étape, on commence tout d'abord par préparer des granulés dont la composition correspond à la composition du substrat, coeur de la pièce selon l'invention.

Ces granulés sont préparés en alimentant une extrudeuse avec les différents constituants destinés à former les granulés par l'intermédiaire d'une trémie.

Cette extrudeuse est une extrudeuse bi-vis corotative Brabender^{®} équipée de 6 zones de chauffe assurant la régulation de la température.

Dans cet exemple, comme l'on souhaite préparer une pièce avec un coeur riche en matière d'origine renouvelable, le mélange extrudé a la composition suivante en % en masse :
- Mélange de copolymère Acrylonitrile-Butadiène-Styrène (ABS^{®}) et de Polycarbonate, BAYBLEND^{®} T 85 XF commercialisé par Bayer MaterialScience^{®}: 50%.
- Polypropylène (PP), PPC 7712 commercialisé par Total^{®} : 45 %.
- Agent de compatibilisation, LOTADER AX8900^{®} commercialisé par Arkema : 5%.

L'extrudât obtenu est ensuite refroidi puis soumis à une opération de pastillage, granulation pour donner des granulés ayant généralement une forme de cylindres, et d'une taille généralement standard (diamètre moyen de 2 mm pour une hauteur moyenne de 2 et 5 mm).

Les granulés dont la composition correspond à la composition de la couche ignifuge selon l'invention telle que décrite plus haut sont des granulés d'un polypropylène ignifugé sans halogène disponible dans le commerce sous la dénomination POLYFLAM^{®} RIPP 490.

Les granulés de POLYFLAM^{®} ont généralement une forme de cylindres, avec un diamètre moyen de 2 mm pour une hauteur moyenne de 2 et 5 mm. On fabrique ensuite des pièces selon l'invention à structure coeur-peau, à savoir des profilés bicouches formant une goulotte.

Ces pièces sont fabriquées par co-extrusion de la matière destinée à former le coeur de la pièce qui a été préparée lors de la première étape, et de la matière destinée à former la couche ignifuge ou peau de la pièce, à savoir le POLYFLAM^{®}. La co-extrusion est réalisée en utilisant deux extrudeuses mono-vis YVROUD d'un diamètre de 30 mm qui sont reliées à une filière de co-extrusion vers laquelle sont acheminés simultanément le flux de matière fondu constituant le coeur et le flux de matière fondu constituant la peau de la pièce.

La première extrudeuse est alimentée, par l'intermédiaire d'une trémie, avec les granulés préparés comme décrit plus haut destinés à former le coeur de la pièce, tandis que la seconde extrudeuse est alimentée, par l'intermédiaire d'une trémie, par les granulés de POLYFLAM^{®} destinés à former la peau, la couche ignifuge de la pièce.

Les rôles de la première et de la seconde extrudeuses peuvent être inversés.

Le flux de matière fondu destiné à former le coeur, substrat, formé dans la première extrudeuse et le flux de matière fondu destiné à former la peau, couche ignifuge, formé dans la seconde extrudeuse sont acheminés vers une filière de co-extrusion dont la température est régulée, au moyen de trois zones de chauffe.

La filière permet de mettre en forme une bande de 60 mm coextrudée bi-composants, avec une couche de peau 1 mm d'épaisseur constituée par le matériau décrit plus haut à savoir le matériau de la société A. Schulman^{®} référencée Polyflam RPP 490 CS1, et une couche de coeur de 0,8 mm constituée par le matériau décrit plus haut.

Cet exemple prouve qu'il est effectivement possible de fabriquer les pièces selon l'invention par un procédé de co-extrusion.

Cet exemple prouve, en outre, qu'une adhésion de bonne qualité existe entre le coeur et la peau de la pièce selon l'invention.

En effet, la structure bi couche obtenue a été coupée perpendiculairement à la surface puis ensuite observée au microscope. L'analyse de l'interface montre qu'il n'existe pas de vide ni de décollement entre la couche de surface et le substrat constituant le coeur.

### Exemple 3.

Dans cet exemple, on étudie le comportement au feu des pièces préparées dans les exemples 1 et 2.
- On réalise tout d'abord des essais au fil incandescent (« *Glow Wire* ») sur les pièces selon l'invention des exemples 1 et 2.
   Les essais sont réalisés selon la norme IEC 60695-2-13 pour déterminer la « *Glow Wire Ignition Temperature* » (« *GWIT* ») et selon la norme IEC 60695-2-11 pour déterminer le *« Glow Wire Flammability Index* » (« *GWIF »).*
   Pour la pièce selon l'invention de l'exemple 1 et pour la pièce selon l'invention de l'exemple 2, on a mesuré chaque fois une valeur de « GWFI » de 750°C et une valeur de « GWIT » de 775°C.
   Les valeurs de GWIT et de GWFI des pièces selon l'invention, des exemples 1 et 2, déterminées conformément aux normes (CEI 60695-2-13 et 60695-2-11) satisfont donc aux exigences fixées par la norme européenne EN 50085-1 : 2005 paragraphe 13.1.1.
   En effet, la norme EN 50085-1 : 2005 spécifie les règles et les essais pour les systèmes de goulottes et les systèmes de conduits-profilés destinés au logement de conducteurs isolés, câbles et autres équipements électriques éventuels, et le paragraphe 13.1.1 *(« Initiation of fire* ») spécifie que pour les pièces non-métalliques ou composites de composants de systèmes qui ne sont pas nécessaires pour maintenir en place les pièces qui transportent le courant et les pièces du circuit de mise à la terre en position, mais qui sont en contact avec ces dernières, le test au fil incandescent (selon 60695-2-11) est réalisé à une température de 650°C. Cette température définit donc la GWIF minimale exigée par la norme EN 50085-1 : 2005 et elle est largement dépassée par les pièces selon l'invention.
- On a ensuite réalisé des essais de propagation du feu (« *Spread of Fire* ») sur les pièces selon l'invention des exemples 1 et 2.

Ces essais sont réalisés suivant la norme EN 50085-1 : 2005, paragraphe 13.1.3 (« *Spread of Fire* ») dans lequel l'échantillon à tester est exposé à la flamme pendant 60s ± 2s.
Selon cette norme, on considère que l'échantillon a passé le test avec succès s'il ne s'enflamme pas (aucune ignition observée) ou dans le cas où il s'enflamme (ignition) si la flamme s'éteint dans les 30 secondes après le retrait de la flamme d'essai (c'est à dire du brûleur) et si la chute de particules ne provoque pas l'ignition du papier mousseline placé sous l'éprouvette et si aucune trace de combustion n'est observée 50 mm sous le « clamp » supérieur.

Avec les pièces selon l'invention des exemples 1 et 2, on n'a pas observé de persistance de la flamme au-delà des 60 secondes c'est-à-dire que la pièce, s'est enflammée, mais après retrait de la flamme d'essai (au bout de 60 secondes), la flamme (de la pièce) s'est éteinte aussitôt.

Les pièces selon l'invention ont donc passé avec succès les essais de propagation du feu.

## Revendications

1. Pièce extrudée comprenant un substrat comprenant au moins un polymère thermoplastique, et une couche ignifuge en un matériau ignifuge enrobant le substrat de sorte que la surface externe de la pièce soit composée uniquement dudit matériau ignifuge, dans laquelle la couche ignifuge adhère au substrat, le matériau ignifuge comprend une polyoléfine et un composé ignifuge non-halogéné, et le substrat comprend un mélange d'une polyoléfine et d'au moins un biopolymère thermoplastique et/ou d'au moins un polymère thermoplastique, et un agent de compatibilisation du biopolymère thermoplastique et/ou du polymère thermoplastique avec la polyoléfine.

2. Pièce selon la revendication 1, dans laquelle le polymère thermoplastique du substrat est issue en totalité ou en partie du recyclage, de préférence le polymère thermoplastique du substrat est issu à au moins 50% en masse du recyclage.

3. Pièce selon la revendication 1 ou 2, dans laquelle la polyoléfine est choisie parmi les polyéthylènes, les polypropylènes, et leurs mélanges.

4. Pièce selon l'une quelconque des revendications précédentes, dans laquelle la polyoléfine du matériau ignifuge de la couche et la polyoléfine du substrat sont identiques.

5. Pièce selon l'une quelconque des revendications précédentes, dans lequel la polyoléfine du substrat est totalement ou en partie issue du recyclage.

6. Pièce selon l'une quelconque des revendications précédentes, dans laquelle le composé ignifuge non-halogéné est choisi parmi les polyphosphates d'ammonium.

7. Pièce selon l'une quelconque des revendications précédentes, dans laquelle le composé ignifuge non halogéné représente de 5% à 40% en masse, de préférence de 10% à 30% en masse par rapport à la masse totale du matériau ignifuge qui constitue la couche ignifuge.

8. Pièce selon l'une quelconque des revendications précédentes, dans laquelle le matériau ignifuge comprend en outre au moins un additif qui modifie une ou plusieurs propriétés parmi les propriétés suivantes de la couche : l'aspect esthétique, la couleur, la résistance de la surface de la couche au vieillissement, la résistance chimique de la surface de la couche vis-à-vis des substances chimiques telle que l'huile d'olive, la rugosité de surface, les propriétés de barrière à l'humidité, la résistance à l'usure, l'indice de cheminement comparatif, et la résistance à l'absorption d'eau.

9. Pièce selon l'une quelconque des revendications précédentes, dans laquelle la couche ignifuge a une épaisseur supérieure ou égale à 0,2 mm, de préférence une épaisseur de 0,3 à 0,8 mm.

10. Pièce selon l'une quelconque des revendications précédentes, dans laquelle le substrat comprend de 35% à 55% en masse, de préférence 45% en masse de polyoléfine(s), de 40% à 60% en masse, de préférence 50% en masse, de biopolymère(s) thermoplastique(s) et/ou de polymère(s) thermoplastique(s), et de 3% à 10% en masse, de préférence 5% en masse d'agent de compatibilisation, par rapport à la masse totale du substrat.

11. Pièce selon l'une quelconque des revendications précédentes, dans laquelle le biopolymère thermoplastique est choisi parmi les poly(acide lactiques) PLAs.

12. Pièce selon l'une quelconque des revendications précédentes, dans laquelle le polymère thermoplastique est choisi parmi les copolymères acrylonitrile butadiène-styrène ABS, et les mélanges de polycarbonates PC et de copolymères acrylonitrile butadiène-styrène ABS.

13. Pièce selon l'une quelconque des revendications précédentes, dans laquelle l'agent de compatibilisation est un terpolymère statistique d'éthylène, d'acrylate de méthyle et de méthacrylate de glycidyle.

14. Pièce selon l'une quelconque des revendications précédentes, qui est choisie parmi les pièces destinées à la gestion et/ou à la protection des câbles et systèmes de câbles, telles que les goulottes et les chemins de câbles.

15. Procédé de préparation de la pièce selon l'une quelconque des revendications 1 à 14, comprenant au moins une étape dans lequel on réalise l'extrusion simultanée, dans une filière de co-extrusion dont le profil est adapté à la forme de la pièce, d'un premier courant de matière fondue destinée à former le substrat, préparé dans une première extrudeuse, et d'un deuxième courant de matière fondue destinée à former la couche ignifuge, préparé dans une deuxième extrudeuse.

## Patentansprüche

1. Extrudiertes Plastikteil, ein Substrat umfassend, das wenigstens ein thermoplastisches Polymer und eine unentzündbare Schicht aus einem unentzündbaren Material umfasst, die das Substrat so ummantelt, dass die Außenoberfläche des Teils nur aus dem genannten unentzündbaren Material besteht und bei dem die unentzündbare Schicht an dem Substrat haftet, wobei das unentzündbare Material ein Polyolefin und eine unentzündbare halogenfreie bzw. nicht halogenisierte Verbindung umfasst, und das Substrat eine Mischung aus einem Polyolefin und wenigstens einem thermoplastischen Biopolymer und/oder wenigstens einem thermoplastischen Polymer sowie ein Agens zur Kompatibilisierung des thermoplastischen Biopolymers und/oder des thermoplastischen Polymers mit dem Polyolefin umfasst.

2. Teil nach Anspruch 1, bei dem das thermoplastische Polymer des Substrats ganz oder teilweise aus dem Recycling stammt; vorzugsweise wenigstens 50 Masse% des thermoplastischen Polymers des Substrats aus dem Recycling stammen.

3. Teil nach Anspruch 1 oder 2, bei dem das Polyolefin ausgewählt wird unter den Polyethylenen, den Polypropylenen, und ihren Mischungen.

4. Teil nach einem der vorhergehenden Ansprüche, bei dem das Polyolefin des unentzündbaren Materials der Schicht und das Polyolefin des Substrats identisch sind.

5. Teil nach einem der vorhergehenden Ansprüche, bei dem das Polyolefin des Substrats ganz oder teilweise aus dem Recycling stammt.

6. Teil nach einem der vorhergehenden Ansprüche, bei dem die unentzündbare halogenfreie bzw. nicht halogenisierte Verbindung ausgewählt wird unter den Ammoniumpolyphosphaten.

7. Teil nach einem der vorhergehenden Ansprüche, bei dem die unentzündbare halogenfreie bzw. nicht halogenisierte Verbindung, bezogen auf die die unentzündbare Schicht bildende Gesamtmasse des unentzündbaren Materials, 5 bis 40 Masse%, vorzugsweise 10 bis 30 Masse% repräsentiert.

8. Teil nach einem der vorhergehenden Ansprüche, bei dem das unentzündbare Material wenigstens ein Additiv umfasst, das eine oder mehrere Eigenschaft unter den folgenden Eigenschaften der Schicht umfasst : ästhetisches Aussehen, Farbe, Alterungsfestigkeit der Oberfläche der Schicht, chemische Festigkeit der Oberfläche der Schicht gegenüber chemischen Substanzen wie etwa Olivenöl, Oberflächenrauheit, Feuchtigkeitsbarriere-Eigenschaften, Verschleißfestigkeit, vergleichende Kriechstromfestigkeit, Wasserabsorptionsfestigkeit.

9. Teil nach einem der vorhergehenden Ansprüche, bei dem die unentzündbare Schicht eine Dicke von mehr als oder gleich 0,2 mm, bevorzugt eine Dicke von 0,3 bis 0,8 mm, hat.

10. Teil nach einem der vorhergehenden Ansprüche, bei dem das Substrat umfasst: 35 bis 55 Masse%, bevorzugt 45 Masse% Polyolefin(e), 40 bis 60 Masse% , bevorzugt 50 Masse% thermoplastisches (thermoplastische) Biopolymer(e) und/oder thermoplastisches (thermoplastische) Polymer(e), und 3 bis 10 Masse%, bevorzugt 5 Masse% Kompatibilisierungsagens, bezogen auf die Gesamtmasse des Substrats.

11. Teil nach einem der vorhergehenden Ansprüche, bei dem das thermoplastische Biopolymer ausgewählt wird unter den Polymilchsäuren PLAs.

12. Teil nach einem der vorhergehenden Ansprüche, bei dem das thermoplastische Biopolymer ausgewählt wird unter den Acrylnitril-Butadien-Styrol-Copolymeren ABS, und den Mischungen von Polycarbonaten PC und Acrylnitril-Butadien-Styrol-Copolymeren ABS.

13. Teil nach einem der vorhergehenden Ansprüche, bei dem das Kompatibilisierungsagens ein statitisches Terpoplymer von Ethylen, von Methylacrylat und von Glycidylmethacrylat ist.

14. Teil nach einem der vorhergehenden Ansprüche, das ausgewählt wird unter den Teilen, die bestimmt sind für das Management und/oder den Schutz von Kabeln und Kabelsystemen.

15. Verfahren zur Herstellung des Teils nach einem der Ansprüche 1 bis 14, wenigstens einen Schritt umfassend, in dem man in einem Koextrusionswerkzeug mit an die Form des Teils angepasstem Profil simultan extrudiert: einen ersten Fluss eines zur Bildung des Substrats bestimmten geschmolzenen Materials, hergestellt in einem ersten Extruder, und einen zweiten Fluss eines zur Bildung der unentzündbaren Schicht bestimmten geschmolzenen Materials, hergestellt in einem zweiten Extruder.

## Claims

1. An extruded part comprising a substrate comprising at least one thermoplastic polymer, and a fire-retardant layer made of a fire-retardant material coating the substrate so that the external surface of the part exclusively consists of said fire-retardant material, wherein the fire-retardant layer adheres to the substrate, the fire-retardant material comprises a polyolefin and a non-halogenated fire-retardant compound, and the substrate comprises a mixture of a polyolefin and of at least one thermoplastic biopolymer and/or of at least one thermoplastic polymer, and an agent for compatibilization of the thermoplastic biopolymer and/or of the thermoplastic polymer with the polyolefin.

2. The part according to claim 1, wherein the thermoplastic polymer of the substrate totally or partly stems from recycling, preferably the thermoplastic polymer of the substrate by at least 50% by mass stems from recycling.

3. The part according to claim 1 or 2, wherein the polyolefin is selected from polyethylenes, polypropylenes and mixtures thereof.

4. The part according to any one of the preceding claims, wherein the polyolefin of the fire-retardant material of the layer and the polyolefin of the substrate are identical.

5. The part according to any one of the preceding claims, wherein the polyolefin of the substrate totally or partly stems from recycling.

6. The part according to any one of the preceding claims, wherein the non-halogenated fire-retardant compound is selected from ammonium polyphosphates.

7. The part according to any one of the preceding claims, wherein the non-halogenated fire-retardant compound represents from 5% to 40% by mass, preferably from 10 to 30% by mass, based on the total mass of the fire-retardant material which constitutes the fire-retardant layer.

8. The part according to any one of the preceding claims, wherein the flame-retardant material further comprises at least one additive which modifies one or several properties from among the following properties of the layer: the esthetical aspect, the color, the resistance of the surface of the layer to aging, the chemical resistance of the surface of the layer towards chemical substances such as olive oil, the surface roughness, the humidity barrier properties, the resistance to wear, the comparative tracking index, and the water uptake resistance.

9. The part according to any one of the preceding claims, wherein the fire-retardant layer has a thickness greater than or equal to 0.2 mm, preferably a thickness from 0.3 to 0.8 mm.

10. The part according to any one of the preceding claims, wherein the substrate comprises from 35% to 55% by mass, preferably 45% by mass of polyolefin(s), from 40 to 60% by mass, preferably 50% by mass, of thermoplastic biopolymer(s) and/or of thermoplastic polymer(s), and from 3% to 10% by mass, preferably 5% by mass of a compatibilization agent, based on the total mass of the substrate.

11. The part according to any one of the preceding claims, wherein the thermoplastic biopolymer is selected from among poly(lactic acid)s (PLAs).

12. The part according to any one of the preceding claims, wherein the thermoplastic polymer is selected from among acrylonitrile-butadiene-styrene (ABS) copolymers, and mixtures of polycarbonates PC and of acrylonitrile-butadiene-styrene (ABS) copolymers.

13. The part according to any one of the preceding claims, wherein the compatibilization agent is a random terpolymer of ethylene, methyl acrylate and glycidyl methacrylate.

14. The part according to any one of the preceding claims, which is selected from among parts intended for handling and/or protecting cables and cable systems, such as trunkings and cable paths.

15. A method for preparing the part according to any of claims 1 to 14, comprising at least one step wherein simultaneous extrusion is carried out, in a co-extrusion die the profile of which is adapted to the shape of the part, of a first stream of molten material intended to form the substrate, prepared in a first extruder, and of a second stream of molten material intended to form the fire-retardant layer, prepared in a second extruder.
